Europäisches Patentamt

European Patent Office

Office européen des brevets

(11) Publication number: **0 149 020**
**B1**

# (12) EUROPEAN PATENT SPECIFICATION

(45) Date of publication of patent specification: **07.12.88**

(21) Application number: **84112427.4**

(22) Date of filing: **15.10.84**

(51) Int. Cl.⁴: **F 16 H 5/04**

(54) Transmission gear shift and control device, particularly for industrial vehicles.

(30) Priority: **21.10.83 IT 6809483**

(43) Date of publication of application:
**24.07.85 Bulletin 85/30**

(45) Publication of the grant of the patent:
**07.12.88 Bulletin 88/49**

(84) Designated Contracting States:
**DE FR GB SE**

(56) References cited:
**DE-A-1 919 008**
**DE-C- 400 906**
**FR-A-1 103 586**
**FR-E- 70 525**
**GB-A-2 067 687**
**US-A-4 197 760**

(73) Proprietor: **IVECO FIAT S.p.A.**
**Via Puglia 35**
**I-10156 Torino (IT)**

(72) Inventor: **Piazza, Romano**
**Via R. Bracco 4**
**I-25100 Brescia (IT)**

(74) Representative: **Boggio, Luigi et al**
**c/o Ingg. Carlo e Mario Torta Via Viotti, 9**
**I-10121 Torino (IT)**

Courier Press, Leamington Spa, England.

## Description

The present invention relates to a device for the selection and control of the gears of a gearbox, in particular for industrial vehicles.

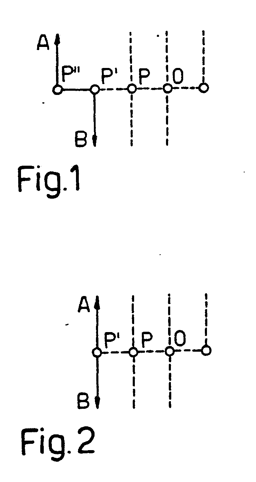

Numerous selection and control devices for gearboxes are known. Such devices essentially have a lever which can be actuated by the driver to control the movement of forks by which the engagement of the desired gears is effected. A simplified diagram of a device of known type for the selection and control of gears is illustrated in Figure 1 of the attached drawings. The gears are indicated with the letters $A$ and $B$; in particular it is to be noticed that for the engagement of the gear $A$ the following three selection movements are necessary: OP, PP', P'P''. Moreover, in order to obtain a precise positioning of the selection lever before engaging the gear there must be provided two spring locks at the points $P$ and $P'$. It is therefore not possible simultaneously to disengage both gears $A$ and $B$, for each of them is then necessary to provide a supplementary security lock to maintain one gear out of engagement when the other gear is engaged. Finally, in such devices, the changing of gears involves first of all the complete disengagement of the currently engaged gear and subsequently the engagement of the other gear; a supplementary selection path is therefore required, in which neither of the two said gears is engaged. In DE—A—1919008 another kind of gear selection and control device is disclosed. The device comprises a shaft actuated by the driver via a lever and carrying cam elements which are axially separated along the shaft itself and operable to cooperate with respective plates connected to the operating forks of the gears, in order to engage a gear and disengage another gear with a single rotation of the shaft. Such a device partially solves the aforesaid drawbacks, but it appears to be quite complicated.

The object of the present invention is that of providing a selection and control device for the gears of a motor vehicle gearbox, by means of which the gears can be engaged in a reliable manner with simple means and a short engagement movement.

The said object is achieved with the present invention in that it relates to a device for the selection and control of gears in a vehicle gearbox of the type in which a lever, actuated by the driver, is operable to act via a link on gear selection forks, said link including a shaft carrying a first selector and a second sector conveniently separated along the axis of the shaft itself and operable to cooperate respectively with a first fork and a second fork, in such a way as to displace one of said forks in one direction and the other of said forks in the opposite direction upon successive lengths of a rotation of the said shaft in a first direction, and vice versa, said first fork being essentially formed as a sliding sleeve with two arms, the translation axis of which is perpendicular to the longitudinal axis of said shaft, one end of a first arm of said first fork cooperating with said first sector and one end of a second arm of said first fork constituting an operating end for engagement of a first gear, characterized in that said second fork is essentially formed as a two-arm lever rotatable about an axis of rotation parallel to the longitudinal axis of said shaft one end of a first arm of said second fork cooperating with said second sector and one end of a second arm of said second fork constituting an operating end for engagement of a second gear.

For a better understanding of the present invention there is hereinafter described a preferred embodiment, purely by way of non limitative example, and with reference to the attached drawings, in which:

Figure 1 is, as already mentioned, a gear selection and engagement diagram of a device of a known type;

Figure 2 is a gear selection and engagement diagram of a device formed according to the present invention;

Figure 3 is a perspective view of the device of Figure 2; and

Figures 4, 5 and 6 are schematic views on an enlarged scale, of the device of Figure 3 in different operating phases.

With reference to Figure 2, the innovative principle of operation adopted for the selection and engagement of two gears indicated $A$ and $B$ disposed in line and which can be engaged one in opposition to the other is illustrated in a schematic manner. From this diagram it will be evident that the stroke P'P'' (see Figure 1) for engagement of the gear $B$ is no longer required.

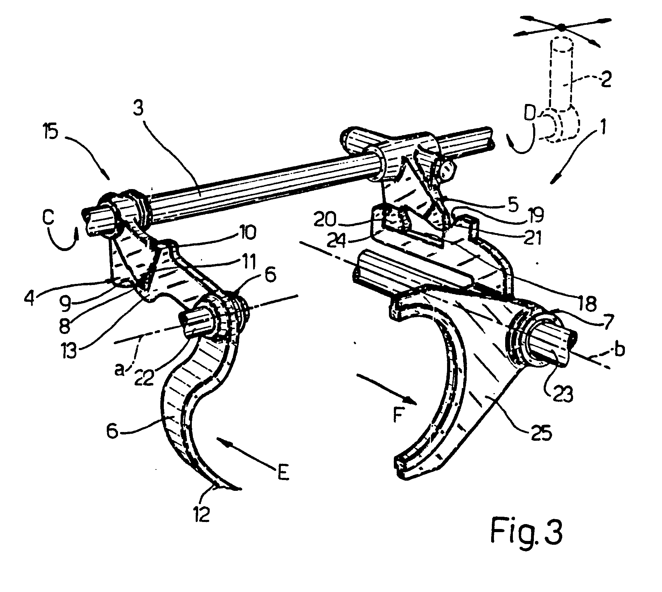

The disengagement of a gear and the successive engagement of the other gear are achieved with a device 1 the essential parts of which are illustrated in Figure 3. This device includes, essentially, a lever 2 the purpose of which is to actuate, by means of a control link 15, forks 6 or 7 operable to engage respectively the gears $A$ or $B$.

The control link includes a control rod 3 coupled to the lever 2; this rod carries two control sectors 4 and 5 suitably spaced from one another. Both the control sectors 4 and 5 are fixed to the control rod 3 and cannot turn about it.

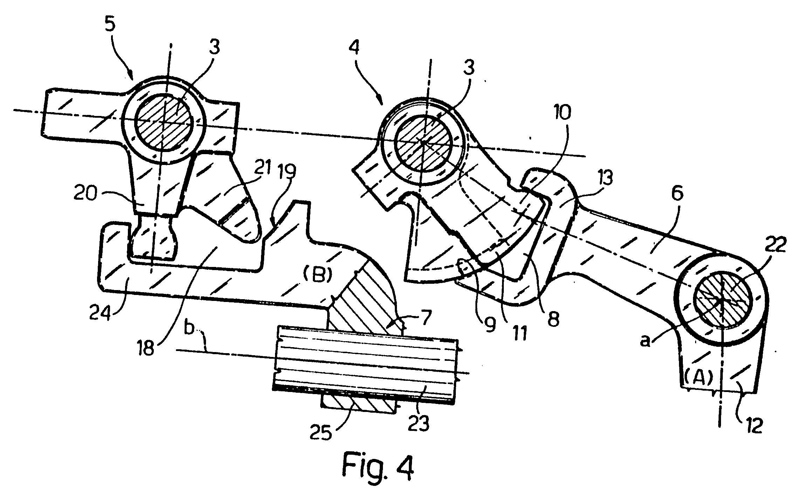

The sectors 4 and 5 each include two control noses 10, 11 and 20, 21 respectively. The control noses 10, 11 of the sector 4 are formed in such a way that they are constituted as part of a single integrated shaped component; the control noses 20, 21 of the sector 5 are two noses separated from one another in such a way that, viewed in the direction of the axis of the control rod 3 (Figure 4) they are angularly offset and separated one from the other and both have an acute angle. With particular reference to Figure 4, the noses of the sectors 4 and 5 engage in cavities 8, 18 and the inclined ramp surfaces 9, 19 of the forks 6 and 7 in a manner which will be illustrated in more detail below.

By examining in detail the forks 6 and 7 it can be observed that the first is essentially shaped as a two-arm lever mounted rotatably about a shaft 22 (axis *a*), having a C-shape end portion 13 engaging with the sector 4 and an opposite end portion 12 which can couple, in a manner not illustrated, with the said gear *A* to engage or disengage this latter. The fork 7 is axially slidably mounted with respect to a shaft 23 (axis *b*) and has a first, essentially C-shape, end portion 24 meshing with the sector 5, and an opposite end portion 25, also of C-shape, extending radially with respect to the shaft (23). This fork 7 can couple, in a manner not illustrated, with the said gear *B* to engage or disengage this latter.

The operation of the device 1 is as follows. With particular reference to Figure 3, it can be seen first of all that a rotation of the shaft 3 in an anticlockwise direction (arrow C) due to the actuation of the lever 2 causes the forks 6 and 7 respectively to perform a rotation of the end 12 about the axis *a* in the direction indicated by the arrow E and a translation of the end 25 along the axis b in the direction indicated by the arrow F. Rotation and translation takes place in the opposite senses from those indicated by the arrows E and F if the shaft 3 is turned in a clockwise sense (arrow D).

The movements which can take place are essentially as follows:

a) selection (Figure 4);

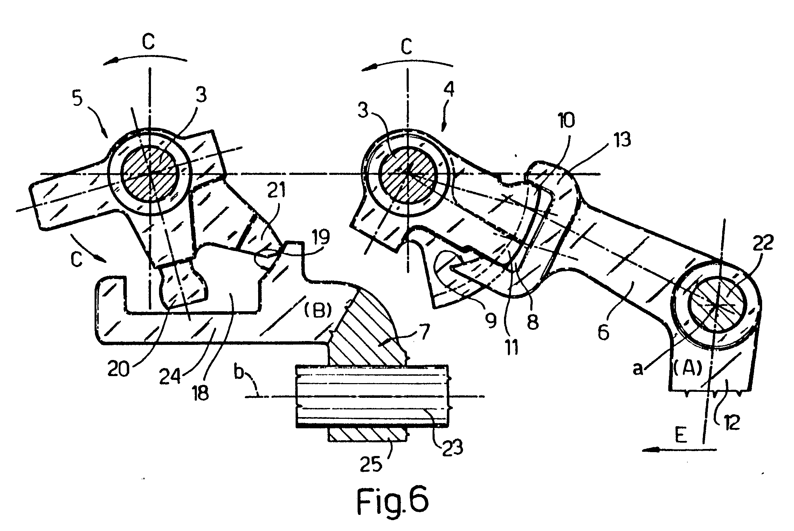

b) engagement of gear *A* and disengagement of gear *B* (Figure 6);

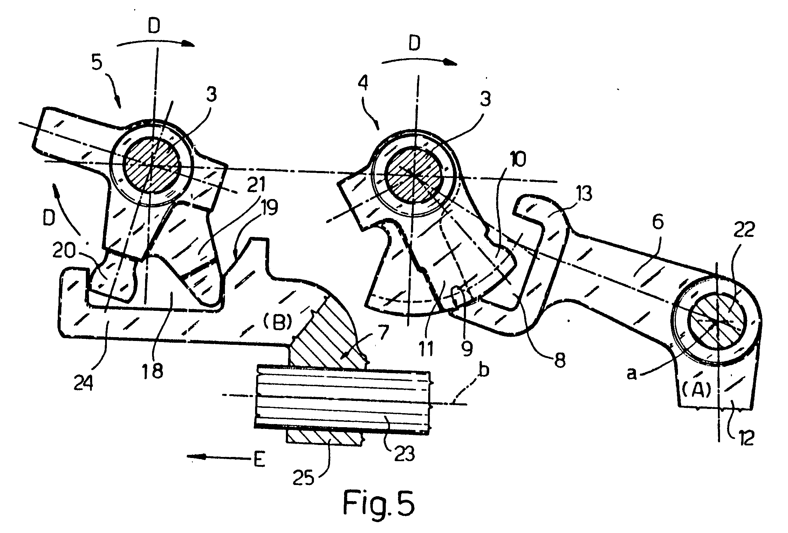

c) engagement of gear *B* and disengagement of gear *A* (Figure 5).

In the selection phase (see Figures 3 and 4) the shaft 3 slides along its axis until the sectors 4 and 5 engage the cavities 8, 18 of the respective forks 6, 7.

The engagement of gear *A* (see Figures 3 and 6) takes place by the effect of the rotation of the shaft 3 in an anti-clockwise sense (arrow C). Such rotation is transmitted to the end 13 of the fork 6 by means of the nose 10 of the sector 4 such that the end 12 displaces in the direction indicated by the arrow E causing engagement of the gear *A*. Correspondingly the nose 21 of the sector 5 prevents the fork 7 from also moving in the direction of the arrow E, maintaining this fork in the position of disengagement of the gear *B*. The engagement of the gear *B* (see Figures 3 and 5) takes place by the effect of the rotation of the shaft 3 in a clockwise sense (arrow D). The rotation movement is transmitted to the end 24 of the fork 7 by the nose 20 of the sector 5 so that the end 25 of this latter displaces in the direction indicated by the arrow E causing engagement of the gear *B*. In the meantime the nose 11 of the sector 4 has carried the fork 6 first into the neutral position (Figure 4) and then prevents the rotation of it by acting on the ramp surface 9. The selection of other gears (gears other than the gears *A* and *B* mentioned above) can take place by simply translating the shaft 3 along its axis in such a way as to make the sectors 4 and 5 engage in corresponding cavities of other forks. From a study of the characteristics of the device formed according to the present invention the advantages which it allows are evident. First of all it permits the gear *A*

or else the gear *B* to be engaged without having to take particular precautions (spring locks, safety locks etc.,). Moreover, it does not allow erroneous manoeuvres to be effected, nor does it require the levers 2 to have supplementary paths by the simple fact that the first half of a movement serves for the disengagement of the engaged gear and the unlocking of the other gear, whilst the second half of the movement causes locking of the previously engaged gear and engagement of the other gear.

## Claims

1. A device for the selection and control of gears in a vehicle gearbox of the type in which a lever (2), actuated by the driver, is operable to act, via a link (15), on gear selection forks (6, 7), said link including a shaft (3) carrying a first sector (5) and a second sector (4) conveniently separated along the axis of the shaft (3) itself and operable to cooperate respectively with a first fork (7) and a second fork (6), in such a way as to displace one of said forks in one direction (F) and the other of said forks in the opposite direction (E) upon successive lengths of a rotation of the said shaft in a first direction (C), and vice versa, said first fork (7) being essentially formed as a sliding sleeve with two arms, the translation axis of which is perpendicular to the longitudinal axis of said shaft (3), one end of a first arm (24) of said first fork (7) cooperating with said first sector (5) and one end of a second arm (25) of said first fork (7) constituting an operating end for engagement of a first gear (*B*), characterized in that said second fork (6) is essentially formed as a two-arm lever (12, 13) rotatable about an axis of rotation (*a*) parallel to the longitudinal axis of said shaft (3), one end of a first arm (13) of said second fork (6) cooperating with said second sector (4), and one end of a second arm (12) of said second fork (6) constituting an operating end for engagement of a second gear (*A*).

2. A device according to Claim 1, characterized by the fact that each said control sector (4, 5) includes two respective noses (10, 11 and 20, 21), a first nose of which is operable to engage a cavity (8, 18) of the associated fork (6, 7) and a second nose (11, 21) is operable to cooperate with a respective ramp (9, 19) of the associated fork (6, 7) in such a way as to prevent engagement of said second gear (*A*) by said second fork (6) when said first gear (*B*) is already engaged by said first fork (7), and vice versa.

3. A device according to Claim 2, characterized by the fact that said cavity (8, 18) and ramp (9, 19) are formed in respective ends of said first arms (13, 24) of said first and second fork (6, 7).

4. A device according to Claim 2 or Claim 3, characterized by the fact that each said control nose (10, 11 and 20, 21) constitutes an integral part of the respective said first and second sectors (4, 5).

**Patentansprüche**

1. Vorrichtung für die Wahl und die Kontrolle der Schaltgänge in einem Getriebegehäuse eines Fahrzeuges, worin ein vom Fahrer betätigter Hebel (2) mittels einer angelenkten Schatung (15) auf Schaltgabeln zur Wahl der Gänge (6, 7) dient, während die angelenkte Schaltung eine Welle (3) aufweist, die einen zweckmässig längs der Achse der Welle (3) aufgeteilten ersten (5) und zweiten Sektor (4) trägt und betätigbar um so mit einer ersten (7) und zweiten Schaltgabel (6) zusammenzuarbeiten dass eine der beiden Schaltgabeln in einer Richtung (F) und die andere Schaltgabel in entgegengesetzter Richtung (G) aufgrund unterschiedlicher Rotationslängen der Welle in einer ersten Richtung (C) und umgekehrt verschoben wird, wobei die erste Schaltgabel (7) im wesentlichen als zweiarmige Gleitmuffe ausgebildet ist, deren Verschiebungswelle senkrecht zur Längsachse der Welle (3) verläuft, während ein Ende des ersten Armes (24) der ersten Gabel (7) mit dem ersten Sektor (5) zusammenarbeitet und ein Ende des zweiten Armes (25) der ersten Gabel (7) ein operatives Endstück zum Eingriff in ein erstes Zahnrad (B) darstellt, dadurch gekennzeichnet dass die zweite Gabel (6) im wesentlichen als ein zweiarmiger Hebel (12, 13) ausgebildet ist der sich parallel zur Längsachse der Welle (3) um eine Achse (a) dreht, wo ein Ende des ersten Armes (13) der zweiten Gabel (6) mit dem zweiten Sektor (4) zusammenarbeitet und ein operatives Endstück zum Eingriff in ein zweites Zahnrad (A) darstellt.

2. Vorrichtung nach Anspruch 1, dadurch gekennzeichnet dass jeder der Schaltsektoren (4, 5) zwei entsprechende Nasen (10, 11 bzw. 20, 21) besitzt, wovon eine erste Nase zum Eingriff in eine Aussparung (8, 18) der zugeordneten Gabel (6, 7) und eine zweite Nase (11, 21) betätigbar sind um mit einer entsprechenden Rampe (9, 19) der zugeordneten Gabel (6, 7) so zusammenzuwirken, dass ein Eingriff in das zweite Zahnrad (A) seitens der zweiten Gabel (6) vermieden wird, wenn das erste Zahnrad (B) schon von der ersten Gabel (7) besetzt ist und umgekehrt.

3. Vorrichtung nach Anspruch 2, dadurch gekennzeichnet dass die Aussparungen (8, 18) und Rampen (9, 19) an den entsprechenden Enden der ersten Arme (13, 24) der ersten und zweiten Schaltgabel (6, 7) angeformt sind.

4. Vorrichtung nach Anspruch 2 oder 3, dadurch gekennzeichnet dass jede der Kontrollnasen (10, 11 bzw. 20, 21) einen wesentlichen Teil des entsprechenden ersten und zweiten Sektors (4, 5) bilden.

**Revendications**

1. Dispositif pour la sélection et la commande d'engrenages dans une boîte de vitesse de véhicule du type dans lequel un levier (2), actionné par le conducteur, peut fonctionner pour agir, via une biellette (15), sur les fourchettes (6, 7) de sélection des engrenages, la biellette comportant un arbre (3) supportant un premier secteur (5) et un second secteur (4) commodément séparés sur l'axe de l'arbre (3) lui-même et pouvant fonctionner pour coopérer respectivement avec une première fourchette (7) et une seconde fourchette (6), de façon à déplacer l'une des fourchettes dans une direction (F) et l'autre des fourchettes dans la direction opposée (E), lors de longueurs successives d'une rotation de l'arbre dans une première direction (C) et vice-versa, la première fourchette (7) étant essentiellement constituée d'un manchon coulissant avec deux bras, dont l'axe de translation est perpendiculaire à l'axe longitudinal de l'arbre (3), une extrémité d'un premier bras (24) de la première fourchette (7) coopérant avec le premier secteur (5) et une extrémité d'un second bras (25) de la première fourchette (7) constituant une extrémité de fonctionnement pour l'engagement d'un premier engrenage (B), caractérisé en ce que la seconde fourchette (6) est essentiellement constituée d'un levier à deux bras (12, 13) pouvant tourner autour d'un axe de rotation (a) parallèle à l'axe longitudinal de l'arbre (3), une extrémité d'un premier bras (13) de la seconde fourchette (6) coopérant avec le second secteur (4), et une extrémité d'un second bras (12) de la seconde fourchette (6) constituant une extrémité de fonctionnement pour l'engagement d'un second engrenage (A).

2. Dispositif selon la revendication 1, caractérisé en ce que chaque secteur de commande (4, 5) comprend deux nez respectifs (10, 11 et 20, 21) dont un premier nez peut fonctionner pour s'engager dans une cavité (8, 18) de la fourchette associée (6, 7) et un second nez (11, 21) peut fonctionner pour coopérer avec une rampe respective (9, 19) de la fourchette associée (6, 7) de façon à empêcher l'engagement du second engrenage (A) par la seconde fourchette (6) lorsque le premier engrenage (B) est déjà engagé par la première fourchette (7) et vice-versa.

3. Dispositif selon la revendication 2, caractérisé en ce que la cavité (8, 18) et la rampe (9, 19) sont formées dans les extrémités respectives des premiers bras (13, 24) des première et seconde fourchettes (6, 7).

4. Dispositif selon la revendication 2 ou la revendication 3, caractérisé en ce que chaque nez de commande (10, 11 et 20, 21) constitue une partie intégrante des premier et second secteurs respectifs (4, 5).

Fig.1

Fig.2

Fig. 3

Fig. 4

EP 0 149 020 B1

Fig. 5

EP 0 149 020 B1

EP 0 149 020 B1

Fig.6